Europäisches Patentamt

European Patent Office

Office européen des brevets

(19)

(11) Numéro de publication : **0 161 949**
**B1**

(12) **FASCICULE DE BREVET EUROPÉEN**

(45) Date de publication du fascicule du brevet :
06.07.88

(51) Int. Cl.⁴ : **G 21 C   1/02**

(21) Numéro de dépôt : **85400418.1**

(22) Date de dépôt : **05.03.85**

(54) Réacteur nucléaire refroidi par un métal liquide.

(30) Priorité : 09.03.84 FR 8403674

(43) Date de publication de la demande :
21.11.85 Bulletin 85/47

(45) Mention de la délivrance du brevet :
06.07.88 Bulletin 88/27

(84) Etats contractants désignés :
BE DE GB IT NL

(56) Documents cités :
EP-A- 0 058 583
FR-A- 2 150 256
FR-A- 2 254 093
FR-A- 2 326 011
FR-A- 2 379 881
FR-A- 2 390 810
US-A- 3 059 908
US-A- 3 805 890
H.R. KLEYN: "Liquid metal fast breeder reactor
development in the U.S. of America", 1969, Delft, NL

(73) Titulaire : COMMISSARIAT A L'ENERGIE ATOMIQUE
31/33, rue de la Fédération
F-75015 Paris (FR)

ELECTRICITE DE FRANCE Service National
2, rue Louis Murat
F-75008 Paris (FR)

(72) Inventeur : Peturaud, Pierre
2, rue Nostradamus
F-13100 Aix en Provence (FR)
Inventeur : Sauvage, Michel
Parc Laurana Traverse Malakoff
F-13100 Aix en Provence (FR)

(74) Mandataire : Mongrédien, André et al
c/o BREVATOME 25, rue de Ponthieu
F-75008 Paris (FR)

## Description

La présente invention concerne un réacteur nucléaire à neutrons rapides de type intégré, dans lequel l'échangeur de chaleur et la pompe de circulation sont associés axialement, formant un composant unique, ladite pompe du type électromagnétique, étant entièrement immergée dans le métal liquide et ledit échangeur ayant sa partie supérieure, au niveau de laquelle s'effectue l'alimentation en sodium primaire chaud, logée dans l'un des caissons de la dalle de fermeture.

On sait que les réacteurs à neutrons rapides de type intégré se caractérisent par le fait que l'ensemble du circuit primaire du réacteur est logé à l'intérieur d'une cuve dite cuve principale, obturée par une dalle. Ainsi, on trouve à l'intérieur de la cuve principale le cœur du réacteur, les pompes du circuit primaire et les échangeurs assurant le transfert de la chaleur entre le circuit primaire et le circuit secondaire, l'ensemble étant immergé dans un métal liquide généralement constitué par du sodium, surmontée à proximité de la dalle par une couverture d'un gaz inerte tel que de l'argon.

Dans les réacteurs de ce type, les pompes et les échangeurs sont généralement répartis circonférentiellement autour de l'axe de la cuve principale et du cœur du réacteur contenu dans celle-ci. Les orifices d'entrée du sodium primaire dans l'échangeur sont disposés en-dessous du niveau libre du sodium chaud de la cuve principale, tandis que les orifices de sortie sont disposés dans un collecteur froid, formé par une structure interne, parfois appelé redan, qui sépare les volumes de sodium chaud et froid. Le sodium du collecteur froid est aspiré par les pompes, puis refoulé, à travers des conduits de forte section, dans le sommier de supportage et d'alimentation du cœur.

Bien qu'elle donne des résultats satisfaisants du point de vue fonctionnement du réacteur, cette conception présente cependant l'inconvénient de nécessiter un collecteur froid formé par une structure interne très sollicitée, de forme parfois complexe et de coût élevé, notamment en raison de la masse importante d'acier inoxydable de qualité nucléaire requise pour sa réalisation et en raison des formes complexes des différentes pièces.

On connaît également un réacteur nucléaire à neutrons rapides du type intégré, comprenant un composant formé par une pompe mécanique et un échangeur associés axialement. (FR-A 2 326 011). Pour ce réacteur qui comprend aussi un collecteur froid du type « à redan », les orifices d'alimentation de l'échangeur sont entièrement disposés sous le niveau libre du sodium chaud de la cuve principale. Une telle conception de réacteur nécessite une hauteur de cuve importante, donc coûteuse en raison de la masse supplémentaire d'acier inoxydable de qualité nucléaire. Un autre inconvénient provient du fait que l'élancement de la cuve, c'est-à-dire le rapport de l'épaisseur de la paroi à sa hauteur, est très faible. Cette caractéristique est défavorable du point de vue de la résistance aux séismes.

La présente invention a précisément pour objet un réacteur nucléaire à neutrons rapides de type intégré comprenant au moins un composant dont la pompe et l'échangeur sont associés axialement, et une dalle à caissons telle que décrite dans le document EP-A1-0 058 583, permettant de limiter les inconvénients des réacteurs mentionnés ci-dessus.

A cet effet, et conformément à l'invention, il est proposé un réacteur nucléaire à neutrons rapides comprenant une cuve obturée par une dalle et contenant une masse d'un métal liquide primaire, un sommier situé dans la cuve et qui supporte un cœur, au moins un composant formé par l'adjonction axiale d'une pompe de circulation comportant des orifices d'entrée et des orifices de sortie pour le métal liquide et un échangeur thermique comportant des orifices d'entrée et des orifices de sortie pour le métal liquide, des moyens pour relier hydrauliquement les orifices de sortie de l'échangeur aux orifices d'entrée de la pompe, une canalisation pour relier hydrauliquement les orifices de sortie de la pompe au sommier et alimenter le cœur en métal liquide, caractérisé en ce que la dalle comporte au moins un caisson, en ce que la partie supérieure de l'échangeur comportant les orifices d'entrée est logée dans ledit caisson de la dalle, lesdits orifices d'entrée étant situés au niveau, voire au-dessus, de la face inférieure de la dalle, et en ce que des moyens sont prévus pour amener le métal liquide aux orifices d'entrée de l'échangeur.

De préférence, l'échangeur comporte une plaque à tube supérieure, une plaque à tube inférieure, et un faisceau de tubes s'étendant entre ces plaques, le fluide primaire circulant autour des tubes, et le fluide secondaire à l'intérieur de ces tubes, et la plaque à tube supérieure est située au-dessus de la dalle.

Grâce à l'introduction partielle de l'échangeur dans un caisson bétonné de la dalle, assurant la protection biologique, la hauteur supplémentaire de la cuve, nécessaire pour y loger un composant issu de la superposition axiale d'une pompe et d'un échangeur, est limitée, ce qui permet d'améliorer la résistance aux séismes et de diminuer le coût du réacteur. Ce gain en hauteur est obtenu, que la cuve soit posée sur le fond du puits de cuve, ou pendue par sa partie supérieure au puits de cuve ou à la dalle.

Par ailleurs, la superposition de la pompe de circulation et de l'échangeur thermique permet de diminuer le nombre de traversées de la dalle qui pour le réacteur de l'invention correspond à une traversée par composant associé : pompe/échangeur, alors que pour un réacteur nucléaire du type intégré classique, il faut une traversée pour la pompe et une autre traversée pour l'échangeur.

Conformément, à une autre caractéristique de l'invention, les orifices de sortie de l'échangeur thermique sont directement reliés aux orifices d'entrée de la pompe de circulation au moyen d'une virole cylindrique.

Il en résulte une simplification des structures internes du bloc réacteur avec la suppression de toute cuve interne ou redan, le collecteur froid, dans la disposition selon l'invention, se limitant à la liaison hydraulique entre l'échangeur et la pompe associés axialement.

Dans une première variante de l'invention, la pompe de circulation et l'échangeur thermique sont des éléments disjoints, l'échangeur étant pendu à la dalle au moyen de brides de support, et la pompe de circulation étant posée sur la structure de supportage du sommier au moyen d'une virole de support.

Dans un mode de réalisation particulier, la liaison hydraulique entre l'échangeur et la pompe est assurée au moyen d'une cloche d'étanchéité.

Dans une deuxième variante de l'invention, la pompe de circulation et l'échangeur thermique forment un composant monolithique qui est pendu à la dale ou posé sur la structure de supportage du sommier.

L'invention est exposée ci-après plus en détail à l'aide de deux figures représentant deux modes d'exécution illustratifs et non limitatifs du circuit primaire d'un réacteur nucléaire à neutrons rapides réalisés conformément aux enseignements de la présente invention.

La figure 1 représente une vue en coupe d'un réacteur nucléaire à neutrons rapides refroidis par un métal liquide conforme à l'invention.

La figure 2 représente une variante du réacteur de la figure 1.

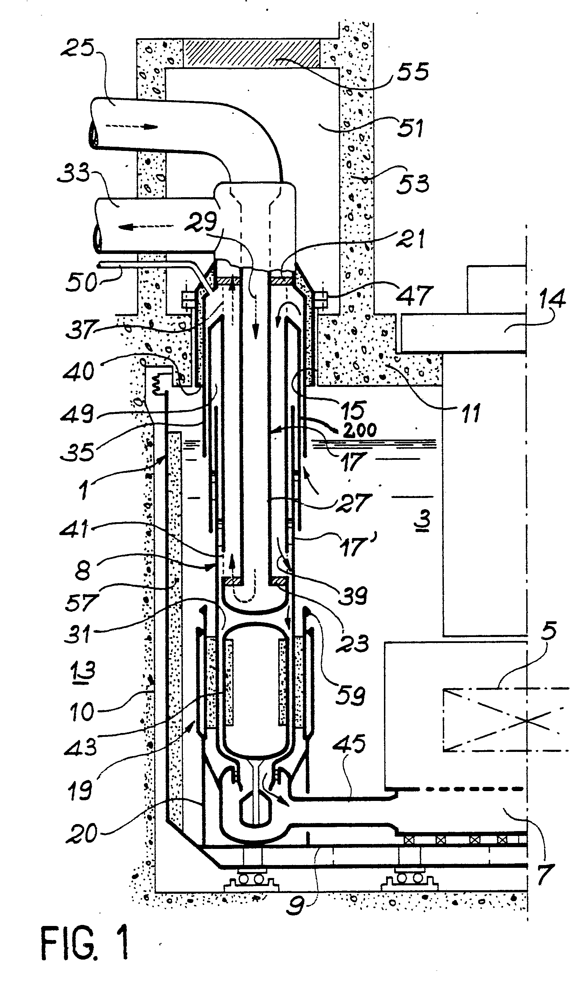

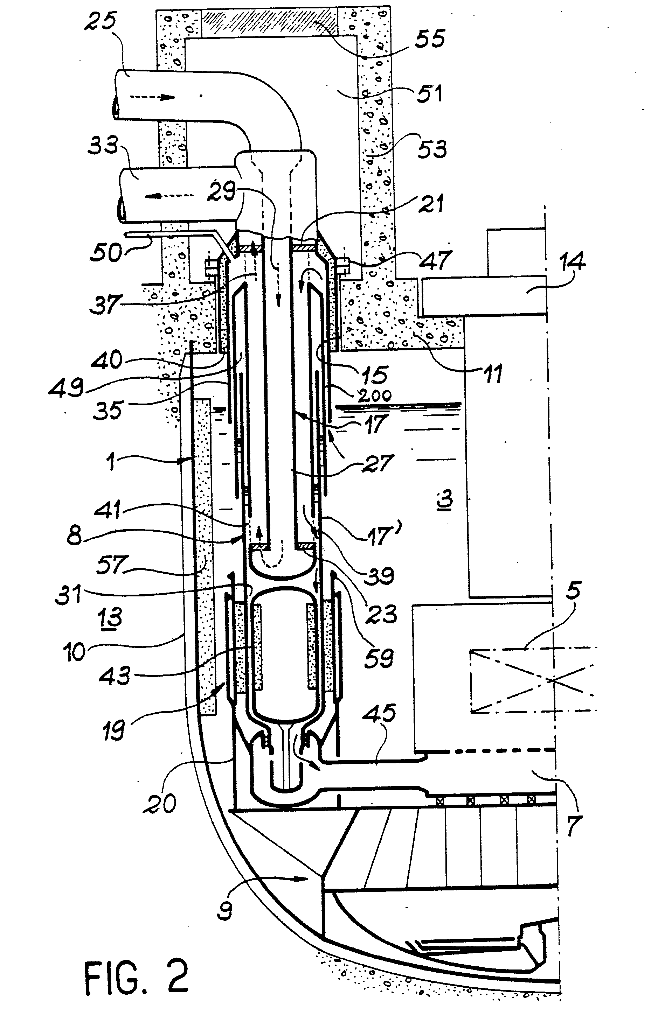

Comme l'illustrent les figures 1 et 2, la conception d'ensemble du réacteur selon l'invention est conforme à celle des réacteurs nucléaires à neutrons rapides du type intégré. Ainsi le réacteur des figures 1 et 2 comprend un bâtiment réacteur 13 en béton armé, définissant un puits de cuve 10 dans lequel est logé une cuve principale 1. Pour des raisons de sûreté, la cuve 1 est doublée extérieurement par une seconde cuve dite cuve de sécurité (non représentée). La cuve 1 est obturée à son extrémité supérieure par une dalle à caissons 11 en béton armé.

La dalle 11 comporte un caisson ou logement 51 pour la tête de chaque échangeur 17. Ces logements 51 sont de forme rectangulaire. Ils comportent des parois de béton 53 qui entourent la tête des échangeurs et assurent ainsi la protection biologique vis-à-vis de l'extérieur. Les canalisations d'amenée 25 et d'évacuation 33 du fluide secondaire traversent ces parois de béton. A sa partie supérieure, le caison 51 est fermé par un bouchon amovible 55 permettant la manutention de l'échangeur et de la pompe.

Dans l'exemple de réalisation représenté sur la figure 1, la cuve 1 est posée sur le fond du puits de cuve 10 ; et dans l'exemple de réalisation représenté sur la figure 2, la cuve 1 est pendue par sa partie supérieure à la dalle à caissons 11.

Le réacteur nucléaire comporte un circuit du métal liquide primaire. Ce circuit comporte des composants comprenant chacun un échangeur de chaleur 17 associé axialement à une pompe de circulation 19 qui assure le refoulement du métal liquide dans le sommier 7 supportant le cœur. Un seul composant a été représenté sur les figures 1 et 2. Le métal liquide traverse le cœur 5 verticalement de bas en haut et s'échauffe au contact des assemblages combustibles. Le sodium chaud sortant du cœur est aspiré dans l'échangeur 17 dans lequel il se refroidit, puis pénètre dans la pompe 19. L'échangeur 17 est appelé intermédiaire car il forme la liaison entre le circuit primaire et le circuit secondaire inactif. Le circuit secondaire assure une circulation du fluide secondaire, généralement un métal liquide tel que le sodium, pour assurer le transfert de la chaleur du métal liquide primaire vers les générateurs de vapeur. Ce circuit comporte des pompes de circulation extérieures au bloc réacteur et non représentées.

Dans les deux exemples de réalisation décrit, l'échangeur intermédiaire 17 est du type à tubes droits avec circulation du métal liquide primaire à l'extérieur des tubes, mais d'autres types d'échangeurs pourraient être envisagés. Il comporte une plaque à tubes supérieure 21 et une plaque à tubes inférieure 23. Un faisceau de tubes s'étend entre la plaque 21 et la plaque 23. Le fluide secondaire froid est amené à la partie supérieure de l'échangeur par la canalisation calorifugée 25. Il traverse l'échangeur 17 de haut en bas par la cheminée centrale 27 (flèche 29) puis remonte à l'intérieur des tubes du faisceau. Le fluide secondaire chaud est ensuite acheminé vers les générateurs de vapeur par la canalisation calorifugée 33. Une isolation thermique entre l'échangeur et la traversée 15 de la dalle 11 est assurée par le calorifuge 40.

Le fluide primaire 3 présent dans la cuve, est tout d'abord aspiré dans la cloche d'alimentation 35. Cette cloche se compose d'une jupe cylindrique, qui détermine avec l'enveloppe extérieure de l'échangeur un passage annulaire. La partie inférieure de la cloche plonge dans le sodium liquide à un niveau tel qu'elle demeure immergée quelles que soient les conditions de fonctionnement du réacteur. La cloche permet d'amener le sodium jusqu'à un niveau proche de celui de la plaque à tube supérieure 21. En effet, afin d'assurer les meilleures conditions d'échange thermique entre le fluide primaire, circulant autour des tubes de l'échangeur, et le fluide secondaire, circulant dans ces tubes, il faut amener le sodium primaire jusqu'au niveau de la plaque à tube pour bénéficier de toute la longueur d'échange. C'est pourquoi les orifices d'entrée 37 de l'échangeur sont disposés juste en dessous de la plaque à tube 21. Cette plaque à tube est elle même disposée au niveau ou au-dessus de la semelle de la dalle 11. La cloche permet au sodium de remonter jusqu'aux orifices d'entrée 37 de l'échangeur, disposés au nviveau ou au-dessus de la semelle de la dalle 11, grâce au circuit de mise en dépression 50.

Pour le démarrage du réacteur, un circuit de mise en dépression 50 est prévu. Ce circuit permet de remplir la cloche de sodium pour amorcer le fonctionnement. Il n'est pas utilisé au cours du fonctionnement normal du réacteur, une fois le siphon amorcé.

Comme on le comprend, le fait que les orifices d'entrée 37 des échangeurs, et la plaque à tube 21 soient situés au niveau ou au-dessus de la dalle 11 permet de limiter l'augmentation de la hauteur de la cuve consécutivement à l'encombrement vertical du composant.

Le fluide primaire est mis en circulation par des pompes telles que 19, ces pompes étant préférentiellement des pompes électromagnétiques.

Les pompes électromagnétiques sont connues en elles-mêmes. Leur fonctionement ne sera donc pas décrit en détail. D'une manière générale, une pompe électromagnétique comprend deux parties essentielles : un conduit et un inducteur. Le conduit est constitué de deux tubes concentriques ménageant un espace annulaire dans lequel circule le métal liquide. Le stator comporte un circuit magnétique disposé radialement autour du conduit et un bobinage placé dans des encoches prévues dans le circuit magnétique. Un noyau magnétique implanté à l'intérieur du tube interne du conduit permet la fermeture du circuit magnétique. Le bobinage est alimenté par un réseau triphasé. Il crée un champ magnétique radial et induit dans le métal de liquide des courants. On génère ainsi des forces qui propulsent le métal liquide. Le conduit est prolongé à sa partie inférieure et à sa partie supérieure par des pièces de révolution qui ferment le noyau et par des diffuseurs qui permettent de raccorder le conduit au circuit sur lequel est installé la pompe.

Les pompes électromagnétiques représentées sur les figures 1 et 2 sont connues en elles-mêmes. Conformément à une variante de l'invention, ces pompes 19 sont disjointes des échangeurs 17 et, dans ce cas, sont posées respectivement sur la structure de supportage 9 du sommier 7. Le métal liquide chaud 3 contenu dans la cuve 1 est aspiré à l'intérieur de l'échangeur 17 grâce à une cloche d'alimentation 35.

Après son entrée dans l'échangeur, le fluide primaire circule de haut en bas selon le sens de la flèche 39 autour du faisceau de tubes. Il ressort à la partie inférieure par les orifices 41 pour pénétrer dans le conduit annulaire 43 de la pompe électromagnétique. En sortie de pompe, le métal liquide est envoyé dans une canalisation 45 raccordée au sommier de support 7.

Le composant formé par la pompe électromagnétique et l'échangeur intermédiaire peut constituer un ensemble monobloc. Cet ensemble est alors suspendu à la dalle 11 par l'intermédiaire de brides de support 47, ou posé sur la structure de supportages 9 du sommier 7.

L'échangeur et la pompe peuvent également être séparés, comme c'est le cas dans les deux exemples de réalisation représentés. Dans ce cas, l'échangeur intermédiaire seul est suspendu à la dalle 11 par l'intermédiaire des brides de support 47. La pompe électromagnétique 19 repose sur la structure 9 au moyen d'une virole de support 20. Cette variante présente notamment l'avantage de pouvoir extraire et manipuler séparément l'échangeur et la pompe. Cette dernière présente des oreilles de préhension 59. Les moyens de manutention peuvent donc être moins puissants. D'autre part, la hauteur nécessaire sous plafond pour les extraire est moins grande. Mais cette solution nécessite la présence d'un raccordement entre la pompe et l'échangeur. Ce raccordement est obtenu, au moyen d'une cloche d'étanchéité 49. Cette cloche d'étanchéité est constituée par une virole 200 solidaire de l'échangeur 17 et qui délimite, avec la paroi extérieure de cet échangeur, un espace annulaire qui est rempli d'une quantité d'un gaz neutre. Une virole 17', solidaire de la pompe 19, et présentant un diamètre plus grand que le diamètre extérieur de la paroi de l'échangeur, mais plus petit que le diamètre de la virole 200, est intercalée entre cette virole 200 et la paroi externe de l'échangeur pour constituer une cloche d'étanchéité.

On remarquera que le réacteur nucléaire de l'invention ne comporte pas de structure spécifique séparant la cuve en un collecteur chaud et un collecteur froid, comme c'est le cas généralement. En effet, selon l'art antérieur, le métal liquide refroidi sortant des échangeurs intermédiaires est déversé dans un collecteur froid de grand volume délimité par ladite structure spécifique. Il est ensuite repris par les pompes de circulation primaire. Dans le cas de l'invention, le collecteur froid est réduit au dispositif de liaison entre l'échangeur 17 et la pompe 19. Ceci constitue un avantage important de l'inventiion, car l'absence de structure spécifique interne simplifie beaucoup la réalisation du bloc réacteur, réduit la quantité de matière d'acier inoxydable nécessaire et donc abaisse le prix de revient. Cependant, il est nécessaire de prévoir sur la paroi de la cuve principale 1 un calorifuge immergé 57.

## Revendications

1. Réacteur nucléaire à neutrons rapides comprenant une cuve (1) obturée par une dalle (11) et contenant une masse d'un métal liquide primaire (3), un sommier (7) situé dans la cuve et qui supporte un cœur (5), au moins un composant (8) formé par l'adjonction axiale d'une pompe (19) de circulation comportant des orifices d'entrée (31) et des orifices de sortie pour le métal liquide primaire et un échangeur thermique (17) comportant des orifices d'entrée (37) et des orifices de sortie (41) pour le métal liquide primaire (3), des moyens (17', 200) pour relier hydrauliquement les orifices de sortie (41) de l'échangeur (17) aux orifices d'entrée (31) de la pompe (19), une canalisation (45) pour relier hydrauliquement les orifices de sortie de la pompe (19) au sommier (7) et alimenter le cœur (5) en métal liquide, caractérisé en ce que la dalle (11) comporte au moins un caisson (51), en ce que la partie supérieure de l'échangeur (17) comportant les orifices d'entrée (37) est logée dans ledit caisson (51) de la dalle, lesdits orifices d'entrée (37) étant situés au niveau, voire au-dessus, de la face inférieure de la dalle (11), et en ce que des moyens sont prévus pour amener le métal liquide (3) aux orifices d'entrée (37) de l'échangeur.

2. Réacteur selon la revendication 1, caractérisé en ce qu'il comporte une cloche d'étanchéité (49) constituée par une virole (200) solidaire de l'échangeur (17) et par une virole (17') solidaire de la pompe, intercalée entre la virole (200) et l'échangeur (17), une quantité d'un gaz neutre étant emprisonnée entre l'échangeur et la virole (200).

3. Réacteur selon les revendications 1 et 2, caractérisé en ce que la pompe (19) et l'échangeur (17) du composant (8) sont des éléments disjoints, l'échangeur (17) étant pendu à la dalle (11) au moyen de brides de support (47), et la pompe (19) étant posée sur une structure de supportage (9) du sommier (7) au moyen d'une virole de support (20).

4. Réacteur selon l'une quelconque des revendications 1 à 3, caractérisé en ce que la pompe (19) est une pompe électromagnétique.

5. Réacteur selon les revendications 1 et 2, caractérisé en ce que la pompe (19) et l'échangeur (17) forment un composant monolithique pendu à la dalle (11) ou posé sur la structure de supportage (9) du sommier (7).

6. Réacteur selon l'une quelconque des revendications 1 à 5, caractérisé en ce que les moyens pour amener le métal liquide aux orifices d'entrée (37) de l'échangeur (17) sont constitués par une cloche d'alimentation (35).

7. Réacteur selon l'une quelconque des revendications 1 à 6, caractérisé en ce que l'échangeur (17) comporte une plaque à tube supérieure (21), une plaque à tube inférieure (23), et un faisceau de tubes s'étendant entre ces plaques (21, 23), le fluide primaire circulant autour des tubes, et le fluide secondaire à l'intérieur de ces tubes, et en ce que la plaque à tube supérieure (21) est située au-dessus de la dalle (11).

## Claims

1. Fast integrated nuclear reactor, comprising a vessel (1) sealed by a slab (11) and containing a mass of primary liquid metal (3), a support and supply member (7) located in the vessel and which supports a core (5), at least one component (8) formed by the axial combustion of a circulating pump (19) having inlets (31) and outlets for the primary liquid metal and a heat exchanger (17) having inlets (37) and outlets (41) for the primary liquid metal (3), means (17', 200) for hydraulically connecting the outlets (41) of exchanger (17) to the inlets (31) of pump (19), a duct (45) for hydraulically connecting the outlets of pump (19) to the supply and support member (7) and for supplying liquid metal to the core (5), characterized in that the slab (11) has at least one housing (51), the upper part of the exchanger (17) has inlets (37) and is located in said slab housing (51), the inlets (37) being positioned level with or above the lower face of the slab (11) and in that means are provided for supplying liquid metal (3) to the exchanger inlets (37).

2. Reactor according to claim 1, characterized in that it comprises a sealing chamber (49) constituted by a first ferrule (200) integral with the exchanger (17) and by a ferrule (17') integral with the pump and inserted between ferrule (200) and exchanger (17), a quantity of neutral gas being trapped between the exchanger and ferrule (200).

3. Reactor according to claims 1 and 2, characterized in that the pump (19) and the exchanger (17) of component (8) are disjointed elements, the exchanger (17) being suspendend on the slab (11) by means of support flanges (47), whilst the pump (19) is placed on a support structure (9) of the support and supply member (7) by means of a support ferrule (20).

4. Reactor according to any one of the claims 1 to 3, characterized in that the pump (19) is an electromagnetic pump.

5. Reactor according to claims 1 and 2, characterized in that the pump (19) and the exchanger (17) form a monolithic component suspended on the slab (11) or placed on the support structure (9) of the support and supply member (7).

6. Reactor according to any one of the claims 1 to 5, characterized in that the means for supplying the liquid metal to the inlets (37) of exchanger (17) are constituted by a supply chamber (35).

7. Reactor according to any one of the claims 1 to 6, characterized in that the exchanger (17) has an upper tube plate (21), a lower tube plate (23) and a bundle of tubes extending between said plates (21, 23), the primary fluid circulating around the tube and the secondary fluid within said tube, and wherein the upper tube plate (21) is positioned above the slab (11).

## Patentansprüche

1. Schneller Kernreaktor mit einem Behälter (1), der mit einer Platte (11) verschlossen ist und eine Masse eines primären Flüssigmetalls (3) enthält, einem Träger (7), der sich in dem Behälter befindet und einen Kern (5) stützt, wenigstens einem Bauteil (8), welcher durch axiale Anbringung einer Umlaufpumpe (19), die Einlaßöffnungen (31) und Auslaßöffnungen für das primäre Flüssigmetall aufweist, und eines Wärmetauschers (17) gebildet ist, der Einlaßöffnungen (37) und Auslaßöffnungen (41) für das primäre Flüssigmetall (3) aufweist, Mitteln (17', 200), um hydraulisch die Auslaßöffnungen (41) des Wärmetauschers (17) mit den Einlaßöffnungen (31) der Pumpe (19) zu verbinden, einer Leitung (45), um hydraulisch die Auslaßöffnungen der Pumpe (19) mit dem Träger (7) zu verbinden und den Kern (5) mit Flüssigmetall zu versorgen, dadurch gekennzeichnet, daß die Platte (11) wenigstens einen Behälter (51) umfaßt, daß der obere Abschnitt des Wärmetauschers (17), der die Einlaßöffnungen (37) umfaßt, in dem genannten Behälter (51) der Platte untergebracht ist, sich die genannten Einlaßöffnungen (37) auf der Höhe, sogar oberhalb, der Unterseite der Platte (11) befinden und daß Mittel vorgesehen sind, um das Flüssigmetall (3) zu den Einlaßöffnungen (37) des Wärmetauschers zu führen.

2. Reaktor nach Anspruch 1, dadurch gekennzeichnet, daß er eine Dichtungsglocke (49) aufweist, die von einem fest mit dem Wärmetauscher (17) verbundenen Mantel (200) und einem fest mit der Pumpe verbundenen Mantel (17') gebildet ist, der zwischen dem Mantel (200) und dem Wärmetauscher (17) eingefügt ist, wobei eine neutrale Gasmenge zwischen dem Wärmetauscher und dem Mantel (200) eingesperrt ist.

3. Reaktor nach den Ansprüchen 1 und 2, dadurch gekennzeichnet, daß die Pumpe (19) und der Wärmetauscher (17) des Bauteils (8) getrennte Elemente sind, der Wärmetauscher (17) and der Plate (11) mitels Stützflanschen (47) aufgehängt ist und die Pumpe (19) auf einer Stützstruktur (9) des Trägers (7) mittels eines Stützmantels (20) aufsitzt.

4. Reaktor nach irgendeinem der Ansprüche 1 bis 3, dadurch gekennzeichnet, daß die Pumpe (19) eine elektromagnetische Pumpe ist.

5. Reaktor nach den Ansprüchen 1 und 2, dadurch gekennzeichnet, daß die Pumpe (19) und der Wärmetauscher (17) ein monolithisches Bauteil sind, welches and der Decke (11) aufgehängt ist oder auf der Stützstruktur (9) des Trägers (7) aufsitzt.

6. Reaktor nach irgendeinem der Ansprüche 1 bis 5, dadurch gekennzeichnet, daß die Mittel zum Heranführen des Flüssigmetalls zu den Einlaßöffnungen (37) des Wärmetauschers (17) von einer Zufuhrglocke (35) gebildet sind.

7. Reaktor nach irgendeinem der Ansprüche 1 bis 6, dadurch gekennzeichnet, daß der Wärmetauscher (17) eine obere Rohrplatte (21), eine untere Rohrplatte (23) und ein sich zwischen diesen Platten (21, 23) erstreckendes Rohrbündel umfaßt, das primäres Fluid um die Rohre und das sekundäre Fluid im Inneren dieser Rohre strömt und daß sich die obere Rohrplatte (21) oberhalb der Platte (11) befindet.

FIG. 1

FIG. 2